# EUROPÄISCHE PATENTANMELDUNG

(11) **EP 3 324 158 A2**
(43) Veröffentlichungstag der Anmeldung: **23.05.2018**
(21) Anmeldenummer: 17201809.5
(22) Anmeldetag: 15.11.2017
(51) Int. Cl.: G01F 23/62, E03F 5/16

(54) **ERKENNUNGSVORRICHTUNG UND ABSCHEIDEANLAGE MIT EINEM ABSCHEIDEBEHÄLTER**

(30) Priorität: 17.11.2016 DE 102016122139
(71) Anmelder: Opanski, Josef Zoltan, 88339 Bad Waldsee (DE)
(72) Erfinder: Opanski, Josef Zoltan, 88339 Bad Waldsee (DE)
(74) Vertreter: Otten, Roth, Dobler & Partner mbB Patentanwälte

(57) **Zusammenfassung**

Es wird eine Abscheideanlage und eine Vorrichtung zur Erkennung einer vertikalen Position einer Oberfläche einer Komponente von mehreren in einem Behälter (3) vorhandenen Komponenten unterschiedlicher Dichte, vorgeschlagen, wobei die Vorrichtung einen auf der Komponente schwimmfähigen Schwimmerkörper aufweist, der im Behälter (3) vertikal bewegbar unterbringbar ist. Erfindungsgemäß weist die Vorrichtung ein entlang des Bewegungsweges des Schwimmerkörpers bewegbares Steuerelement auf, wobei zur Beeinflussung der vertikalen Position des Schwimmerkörpers, das Steuerelement mit dem Schwimmerkörper zeitweise koppelbar ist, so dass im gekoppelten Zustand von Schwimmerkörper und Steuerelement der Schwimmerkörper aus seiner durch die Schwimmerkörper-Schwimmposition vorgegebenen Vertikalposition herausbewegbar und in eine weitere Vertikalposition des Schwimmerkörpers im Behälter (3) bringbar ist.

## Beschreibung

### Stand der Technik

Vorrichtungen zur Erkennung eines Niveaus einer in einem Behälter vorhandenen Komponente wie einer Flüssigkeit bzw. Schlammspiegel-Messvorrichtungen und Abscheideanlage mit solchen Vorrichtungen sind bekannt. Bei Abscheideanlagen wird im Betrieb der Abscheideanlage, die zur Abscheidung von flüssigen und/oder festen Bestandteilen eines der Abscheideanlage zufließenden Mehrkomponentengemisches dient, der Abscheidebehälter kontinuierlich oder diskontinuierlich von dem Mehrkomponentengemisch wie zum Beispiel einem Abwasserstrom beschickt.

Im Hinblick auf die Umwelt belastende Stoffe ist die sichere Betriebsführung und Überwachung der Abscheideanlage von grundlegender Bedeutung. Als interessierende Betriebsparameter sind Niveaus im Abscheidebehälter wie beispielsweise Leichtflüssigkeitsschichten in einer Leichtflüssigkeits-Abscheideanlage oder Schlammschichten in einem Schlammfangbehälter zu nennen.

### Aufgabe und Vorteile der Erfindung

Aufgabe der vorliegenden Erfindung ist es, eine Niveau-Erkennungsvorrichtung bzw. eine Abscheideanlage der eingangs genannten Art zu verbessern, insbesondere im Hinblick auf eine sichere und kontinuierliche Überwachung und Management einer warnrelevanten Betriebssituation der Abscheideanlage.

Diese Aufgabe wird durch die unabhängigen Ansprüche gelöst. Die abhängigen Ansprüche beziehen sich auf vorteilhafte und zweckmäßige Varianten der Erfindung.

Die Erfindung geht aus von einer Vorrichtung zur Erkennung einer vertikalen Position einer Oberfläche einer Komponente von mehreren in einem Behälter vorhandenen Komponenten unterschiedlicher Dichte, welche im Betrieb des Behälters im Behälter schichtweise vorhanden sind, wobei die Vorrichtung einen auf der Komponente schwimmfähigen Schwimmerkörper aufweist, der im Behälter vertikal bewegbar unterbringbar ist, so dass im Betrieb des Behälters anhand einer Schwimmerkörper-Schwimmposition auf der Komponente zumindest die vertikale Position der Oberfläche der Komponente im Behälter erkennbar ist.

Die Vorrichtung dient vorzugsweise zur Erkennung einer vertikalen Position einer flüssigen und/oder einer festen Komponente im Behälter, wobei mehrere vorzugsweise zwei oder drei Komponenten mit unterschiedlicher Dichte in dem Behälter vorhanden sind. Die Komponenten separieren sich abhängig von ihrer Dichte im Behälter schichtweise, da der Behälter als Beruhigungszone bzw. als Sedimentationsbehälter für das dem Behälter zuströmende Mehrkomponentengemisch dient, wobei sich die Strömungsgeschwindigkeit des Gemisches verringert. Der Behälter ist insbesondere ein Abscheidebehälter einer Abscheideanlage wie einer Leichtflüssigkeits-Abscheideranlage und/oder einer Schlammfangeinrichtung oder dergleichen. Der Schwimmerkörper ist vorzugsweise so austariert, dass der Schwimmerkörper auf einer ersten Flüssigkeit mit einer ersten Dichte schwimmt und in einer zweiten Flüssigkeit mit einer geringeren Dichte als die erste Flüssigkeit nicht schwimmt bzw. darin absinkt. Die erste Flüssigkeit kann zum Beispiel eine wässrige Komponente sein und die zweite Flüssigkeit kann eine Leichtflüssigkeit wie Benzin oder ein Öl sein. Damit der Schwimmerkörper im Behälter in vertikaler Richtung entlang eines vorgebbaren Weges bewegbar ist, ist vorteilhafterweise eine Führungsachse bzw. eine Schwimmer-Führung vorhanden, zum Beispiel ein länglicher hohler Körper entlang dem der Schwimmerkörper geführt ist. Die Schwimmer-Führung ist vorzugsweise eine Linearführung und so gestaltet, dass der Schwimmerkörper frei in jede entlang der Schwimmer-Führung vorhandene vertikale Position nach oben und nach unten bewegbar ist, jedoch in Richtung quer zur von der Schwimmer-Führung vorgegeben geführten Bewegungsrichtung nicht bzw. lediglich innerhalb enger festgelegter Grenzen bewegbar ist. Der Schwimmerkörper ist zum Beispiel nur vertikal bzw. senkrecht aber nicht horizontal bewegbar.

Ein erster wesentlicher Aspekt der Erfindung liegt darin, dass die Vorrichtung ein entlang des Bewegungsweges des Schwimmerkörpers bewegbares Steuerelement aufweist, wobei zur Beeinflussung der vertikalen Position des Schwimmerkörpers, das Steuerelement mit dem Schwimmerkörper zeitweise koppelbar ist, so dass im gekoppelten Zustand von Schwimmerkörper und Steuerelement der Schwimmerkörper aus seiner durch die Schwimmerkörper-Schwimmposition vorgegebenen Vertikalposition herausbewegbar und in eine weitere Vertikalposition des Schwimmerkörpers im Behälter bringbar ist. Im nicht miteinander gekoppelten Zustand sind das Steuerelement und der Schwimmerkörper frei bzw. voneinander unabhängig vertikal bewegbar, innerhalb eines jeweils maximal möglichen vertikalen Bewegungsweges bzw. zwischen einer untersten Vertikalposition bis zu einer obersten Vertikalposition. Mit der Kopplung ist der Schwimmerkörper aus seiner Schwimmposition vorgebbar entweder nach oben oder nach unten vertikal bewegbar.

Die Schwimmerkörper-Schwimmposition bezieht sich auf einen Zustand des Schwimmerkörpers in einem Gleichgewichtszustand, also bei vernachlässigbaren Strömungseinflüssen durch sich bewegende Flüssigkeiten oder Festkörper bzw. Komponenten im Behälter.

Durch das mit dem Steuerelement aufgezwungene Herausbewegen des Schwimmerkörpers aus seiner Schwimmposition gemäß der Austarierung des Schwimmerkörpers kann mit dem Schwimmerkörper zumindest eine weitere vertikale Position einer weiteren Komponente im Behälter erkannt werden vorzugsweise zwei oder mehr Vertikalpositionen. Insbesondere lässt sich mit dem Herausbewegen des Schwimmerkörpers aus der Schwimmposition ein weiteres Niveau vertikal oberhalb der austariert vorgegebenen Schwimmposition des Schwimmerkörpers, wie eine Füllhöhe des Behälters, und ein weiteres Niveau unterhalb der Schwimmposition, wie ein Schlammspiegel, erkennen.

Das Steuerelement und der Schwimmerkörper sind vorteilhaft so aufeinander abgestimmt, dass nach dem Herausbewegen des Schwimmerkörpers aus der Schwimmposition und Erreichen der weiteren Vertikalposition die Kopplung zwischen dem Steuerelement und dem Schwimmerkörper sich selbsttätig wieder aufhebt.

Mit der Kopplung wird zur Bewegung des Schwimmerkörpers aus seiner Schwimmposition nach oben oder nach unten eine Kraft genutzt, welche auf das Steuerelement in seiner Umgebung als resultierende bewegende Kraft wirkt. Die Tarierung des Schwimmerkörpers bleibt vorteilhaft unverändert, also das Gewicht und das Volumen des Schwimmerkörpers bzw. dessen Dichte.

Es wird mit der Kopplung eine Kraft auf den Schwimmerkörper wirksam, die durch das Verhalten des Steuerelements in seiner Umgebung bedingt ist. Das Steuerelement befindet sich vorzugsweise in einem anderen, abgetrennten Raum bzw. einem anderen Fluid als der Schwimmerkörper.

Zur Bewegung des Schwimmerkörpers nach oben ist das Steuerelement in einen Zustand versetzt, in dem die Auftriebskraft des Steuerelements, die der Schwerkraft entgegenwirkt, größer als die Gewichtskraft gemäß dem Gewicht des Steuerelements ist. Die Auftriebskraft auf das Steuerelement ist so groß, dass im gekoppelten Zustand mit dem Schwimmerkörper die Auftriebskraft ausreicht, auch den Schwimmerkörper nach oben zu bewegen.

Zur Bewegung des Schwimmerkörpers aus seiner Schwimmposition nach unten, befindet sich das Steuerelement in einem Zustand, in welchem es in seiner Umgebung sinkt, also einen vergleichsweise geringen Auftrieb besitzt. Auf den Schwimmerkörper wirkt im gekoppelten Zustand mit dem Steuerelement als relevante Kraft zusätzlich die Gewichtskraft gemäß dem Gewicht des Steuerelements, so dass der Auftrieb des Schwimmerkörpers nicht ausreicht, den Schwimmerkörper in seiner Umgebung schwimmfähig zu halten. Der Schwimmerkörper sinkt in der Folge mit dem Steuerelement nach unten.

Die Kopplung bewirkt eine gezielte Einflussnahme von außen auf den Schwimmerkörper, um den Schwimmerkörper zwangsweise vertikal zu bewegen. Die Schwimmerkörper-Schwimmposition unterliegt ansonsten bewusst nur der vorgegebenen Austarierung des Schwimmerkörpers bzw. der Schwimmfähigkeit in der dazugehörigen Komponente.

Mit der Kopplung mit von außen beinflussbarem Auftriebs- oder Sinkverhalten des Steuerelements in seiner Umgebung, was weiter unten noch erklärt ist, ist vorteilhafterweise mit Hilfe des Schwimmerkörpers eine Erkennung und damit Überwachung eines Niveaus im Behälter von einer weiteren Komponente im Behälter möglich, die sich von der Komponente unterscheidet, auf welche der Schwimmerkörper speziell austariert ist. Als Komponente im Behälter sind nicht die Inhalte in der abgetrennten Umgebung im Inneren der Führungsanordnung zu verstehen, in welcher das Steuerelement bewegbar untergebracht ist.

Beispielsweise ist ein Schwimmerkörper zur Erkennung eines Flüssigkeitsspiegels in Abwasser-Abscheideanlagen so austariert, dass der Schwimmerkörper auf einer wässrigen Phase mit einer Dichte von etwa 1 kg/Liter aufschwimmt. Eine Erkennung eines Oberflächen-Niveaus im Behälter von einer weiteren geschichtet vorhandenen Komponente ist mit dem Schwimmerkörper bei bekannten Einrichtungen nicht praxistauglich möglich.

Hier setzt die Erfindung an, wobei die erfindungsgemäße Vorrichtung vorteilhaft mit genau einem Schwimmerkörper im Behälter arbeitet und neben der Erkennung des Niveaus der Komponente, auf welche der Schwimmerkörper austariert ist, eine vorzugsweise zwei weitere Niveaus bzw. vertikale Positionen von weiteren Komponenten im Behälter zuverlässig erkennt und mit Hilfe einer auf den Schwimmerkörper abgestimmten Positions-Erfassung, die Reed-Kontakte und einen Permanentmagnet am Schwimmerkörper umfasst, entsprechende Betriebssignale zur Überwachung des Betriebs des Behälters bzw. der Abscheideanlage bereitstellt.

Vorzugsweise ist mit der Erfindung die jeweilige vertikale Position einer Oberfläche von genau zwei weiteren geschichteten Komponenten im Behälter erkennbar. Vorzugsweise umfassen die zwei weiteren betreffenden Komponenten eine erste weitere Komponente, wie eine Leichtflüssigkeit, die eine geringere Dichte aufweist als die Komponente, auf welche der Schwimmerkörper austariert ist, und eine zweite weitere Komponente, die eine größere Dichte aufweist als die Komponente, wie ein Feststoff, bezüglich welcher der Schwimmerkörper austariert ist.

Mit dem genau einen Schwimmerkörper lassen sich daher erfindungsgemäß vorteilhaft insgesamt zum Beispiel von drei Komponenten mit untereinander unterschiedlicher Dichte die jeweilige vertikale Position der jeweiligen Oberfläche erkennen, bezogen auf die im Behälter geschichtet vorhandenen Komponenten, wenn der Behälter eine Beruhigungszone für das Mehrkomponentengemisch bildet, zum Beispiel als Sedimentationsbehälter ausgebildet ist.

Bisher dient ein Schwimmerkörper in einem Abscheidebehälter allein zur Bestimmung der genau einen Komponente, auf welche der Schwimmerkörper austariert ist. Mit der vorliegenden Erfindung sind vertikale Positionen einer Oberfläche bzw. eines Niveaus von mehreren Komponenten unterschiedlicher Dichte in einem Behälter wie einem Abscheidebehälter während einer vergleichsweise kurzen Messphase bestimmbar.

Dabei ist es darüber hinaus vorteilhaft, dass sich insbesondere zeitlich vorgebbar bzw. zu beliebigen Zeitpunkten die betreffenden Niveaus erfassen und daraus dazugehörige Betriebsparameter bestimmen lassen.

Gemäß einem weiteren Aspekt der Erfindung ist es von Vorteil, dass der Schwimmerkörper eine formveränderliche Hülle aufweist, welche einen Aufnahmeraum für ein Medium umschließt, wobei über an den Schwimmerkörper heranreichende Leitungsmittel das Medium in den Aufnahmeraum des Schwimmerkörpers wahlweise einfühlbar und abführbar ist. Der Schwimmerkörper ist beispielsweise in der Art eines Schwimmer-Ballons oder einer aufblasbaren Blase mit einer elastischen Hülle aufgebaut. Über die von außen bzw. über die Kontrolleinheit der Vorrichtung vorgebare Menge des im Schwimmerkörper eingefüllten Gases ist die Schwimmfähigkeit bzw. der Auftrieb des Schwimmerkörpers in einer Flüssigkeit im Behälter bzw. in einem Medium, das im Behälter vorhanden ist, veränderlich vorgebbar ist. Bei evakuiertem bzw. leergesaugtem Schwimmerkörper sinkt dieser in einer Flüssigkeit in einem üblichen Abscheidebehälter wie einem Abwasser nach unten ab. Die Hülle bzw. das Hüllenmaterial des Schwimmerkörpers ist vorteilhaft so gewählt, zum Beispiel aus einem robusten aber flexiblen Elastomer- bzw. Gummimaterial, dass der leergesaugte Schwimmerkörper auf einer Sedimentationsschicht im Bodenbereich des Abscheidebehälters wie einer Schlammschicht von oben aufschwimmt bzw. im Schlamm nicht einsinkt. Damit kann die vertikale Position der Oberfläche der Schlammschicht erkannt bzw. detektiert werden und mittels einer Positions-Erfassung des Schwimmerkörpers ein entsprechendes Betriebssignal an die Kontrolleinheit bzw. eine übergeordnete Einheit weitergeleitet werden. Hierfür ist vorzugsweise die oben beschriebene Positions-Erfassungseinrichtung zum Beispiel mit einem Permanentmagnet an dem Schwimmerkörper und mehreren Reed-Schaltern an einer vertikalen Schwimmerkörper-Führung vorgesehen.

Auf diese Weise kann die vertikale Position der Oberfläche der Schlammschicht kontinuierlich bzw. in vorgebbaren Zeitabständen erkannt, protokolliert bzw. überwacht werden. Beim Erreichen und Erkennen eines z. B. maximal tolerierbaren Schlammniveaus im Behälter wird mit dem Betriebssignal eine Protokollierung "maximales Schlammniveau" und eine Warnmeldung verknüpft, zum Beispiel über Internet bzw. einen Server und die Weiterleitung als Warnmeldung per E-Mail, SMS, oder als Push-Meldung mit Hinweis auf eine dazugehörige Betriebs-App auf einem mobilen Gerät wie insbesondere einem Smartphone.

Entsprechendes gilt für das Erkennen einer maximalen Füllhöhe im Behälter gemäß einer obersten Komponenten-Schicht.

Zum Heranführen und/oder Abführen des Gases wie z. B. Luft oder ein anderes zum Beispiel inertes Gas in das dicht umschlossene Innenvolumen des Ballon-Schwimmerkörpers bzw. aus dem Inneren heraus ist vorzugsweise genau eine Leitung mit dem Schwimmerkörper verbunden, welche außerhalb des Behälters an eine Fördereinrichtung bzw. Gas-Pumpanordnung angeschlossen ist und von dort in das Behälterinnere bis zum Schwimmerkörper führt.

Vorteilhafterweise weist die erfindungsgemäße Vorrichtung eine Erfassungseinrichtung zur Erfassung der vertikalen Position des Schwimmerkörpers im Behälter auf. Mit der Positions-Erfassungseinrichtung wird insbesondere ein Messsignal zur Bestimmung einer vertikalen Position des Schwimmerkörpers im eingebauten Zustand im Behälter bereitgestellt. Insbesondere sind sämtliche möglichen vertikalen Positionen des Schwimmerkörpers im Behälter erfassbar, die sich insbesondere durch vertikale Abstände z. B. im Millimeterbereich oder Zentimeterbereich unterscheiden. Die Erfassungseinrichtung weist vorzugsweise Magnetmittel mit einem Permanentmagnet an dem Schwimmerkörper und eine Mehrzahl von mit dem Permanentmagneten zusammenwirkende Reed-Kontakte bzw. Reed-Schalter auf. Die Reed-Kontakte sind vorteilhaft entlang einer vertikalen Bewegungsführung für den Schwimmerkörper vorhanden und in vertikaler Richtung aneinandergereiht und vertikal beabstandet fest positioniert vorgesehen. Jeder einzelne Reed-Schalter ist schaltbar bzw. erzeugt ein Betriebssignal, wenn der Schwimmerkörper eine dazugehörige vertikale Position im Behälter einnimmt. Hierzu sind die Reed-Kontakte vom Inneren des Behälters mit einer Einheit außerhalb des Behälters in Verbindung vorzugsweise leitungsgebunden wie z. B. mit einem selbstsichernden Elektrokabel.

Das Steuerelement und der Schwimmerkörper sind vorteilhafterweise so abgestimmt, dass die zeitweise Kopplung von Steuerelement und Schwimmerkörper berührungslos bzw. kontaktlos erfolgt.

Dies ist konstruktiv und im Hinblick auf in einem Abscheidebehälter regelmäßig herrschenden rauhen Bedingungen vorteilhaft. Denn aufgrund von im Mehrkomponentengemisch wie einem Abwassergemisch regelmäßig enthaltenen Inhaltsstoffen treten Verschmutzungen, Anhaftungen und Anlagerungen auf sämtlichen betroffenen Oberflächen im Behälterinneren auf, was sich auch auf Kontaktflächen zwischen dem Steuerelement und dem Schwimmerkörper nachteilig auswirken kann. Bei einer kontaktlosen Kopplung sind diese negativen Effekte ausgeschlossen bzw. minimiert.

Vorzugsweise sind Magnetmittel zur Bereitstellung von Magnetkräften vorhanden, mit denen die Kopplung des Schwimmerkörpers mit dem Steuerelement eingerichtet ist. Die Magnetmittel ermöglichen auf einfache Weise eine kontaktlose Kopplung zwischen dem Schwimmerkörper und dem Steuerelement. Vorzugsweise umfassen die Magnetmittel erste Magnetmittel am Schwimmerkörper und zweite Magnetmittel am Steuerelement. Die Magnetmittel umfassen vorzugsweise einen Abschnitt am Steuerelement aus einem magnetischen Material und einen Permanentmagnetabschnitt am Schwimmerkörper. Der Abschnitt am Steuerelement und der Permanentmagnetabschnitt am Schwimmerkörper sind in einer übereinstimmenden vertikalen Position dicht benachbart und lediglich durch einen vergleichsweise dünnen Materialabschnitt zum Beispiel einer Wand von Führungsmitteln zur vertikalen Führung des Steuerelements und/oder des Schwimmerkörpers getrennt. Der trennende Materialabschnitt besteht insbesondere aus einem nicht magnetischen Material.

Vorteilhafterweise ist die Wirkung der die Kopplung einrichtenden Magnetmittel am Steuerelement derart, dass eine Wirkung der Magnetmittel am Schwimmerkörper auf vorhandene Reed-Kontakte, die von den Magnetmitteln am Schwimmerkörper schaltbar sind, nicht beeinträchtigt ist. Vorzugsweise sind die Magnetmittel am Schwimmerkörper, wie z. B. Permanentmagnetmittel, sowohl zur Kopplung mit dem Steuerelement vorhanden und wirksam, als auch zur Erzeugung eines Betriebs- bzw. Positionssignals zur Position des Schwimmerkörpers.

Es ist außerdem vorteilhaft, das eine Führungsanordnung vorgesehen ist, mit welcher das Steuerelement entlang einer Längsachse der Führungsanordnung geführt hin - und her bewegbar ist. Für die Bewegung des Steuerelements ist außerdem ein entsprechender Antrieb vorgesehen, der von außen bzw. von einer Kontrolleinheit der Vorrichtung kontrolliert ist. Die Führungsanordnung ist so ausgebildet, dass die Führungsanordnung in den Behälter so einbaubar ist, dass die Längsachse der Führungsanordnung insbesondere zumindest im Wesentlichen vertikal ausgerichtet insbesondere senkrecht ist. Vorzugsweise dient die Führungsanordnung zur vertikalen Führung des Steuerelements als auch zur vertikalen Führung des Schwimmerkörpers.

Die Führungsanordnung ist z. B. so gebildet, dass das Steuerelement insbesondere gleitend bzw. berührungslos mit Abschnitten der Führungsanordnung zusammenwirkt. Das Steuerelement ist zwischen von der Führungsanordnung vorgegebenen Stellen bzw. einer vertikal oberen und einer vertikal unteren Stelle insbesondere in vertikaler Richtung frei bewegbar.

Insbesondere ist die Führungsanordnung als Linearführung bereitgestellt, die aufrecht ausgerichtet im Behälter unterbringbar ist, so dass die Längsachse der Führungsanordnung im Einbauzustand im Behälter senkrecht ausgerichtet ist.

Auch ist es von Vorteil, dass die Führungsanordnung ein Hohlgefäß mit einem Hohlvolumen umfasst. Das Hohlgefäß mit einem zum Innenvolumen des Behälters insbesondere verschwindenden Volumen ist einfach und robust bereitstellbar. Vorteilhafterweise kann das Hohlgefäß als dicht geschlossenes Behältnis im Behälter untergebracht werden, zum Beispiel als aufrecht stehende hohle Röhre. An das Hohlgefäß ist vorzugsweise eine Zu- und eine Abführleitung für das Zuführen und Abführen von Luft oder ein anderes Gas in das Hohlvolumen angeschlossen. Im Hohlvolumen ist das Steuerelement in Längsrichtung des Hohlgefäßes beweglich untergebracht. Die Länge bzw. Höhe des Hohlgefäßes ist vorteilhaft auf die maximale Füllhöhe des Behälters mit den Komponenten abgestimmt. Insbesondere erstreckt sich das Hohlgefäß im eingebauten Zustand im Behälter vom Boden des Behälters bis etwa zu einem oberen Ende des Behälters bzw. zumindest bis über eine Regelfüllhöhe des Behälters hinaus, bis zu der im Regelbetrieb des Behälters sich die Oberfläche der obersten Komponente im Behälter anstaut.

Eine vorteilhafte Variante der Erfindung zeichnet sich dadurch aus, dass das Steuerelement im Hohlvolumen des Hohlgefäßes hin- und herbewegbar ist. Vorzugsweise dient das Hohlgefäß mit seinem Inneren als vertikale Linearführung für das Steuerelement und mit seiner Außenseite als vertikale Linearführung für den Schwimmerkörper. Der Schwimmerkörper weist hierzu vorteilhaft eine Form auf, so dass der am Hohlgefäß geführt vorhandene Schwimmerkörper nur in Längsrichtung am Hohlgefäß hin- und herverschiebbar ist, nicht aber quer dazu. Der Schwimmerkörper weist zum Beispiel vorzugsweise ein Durchgangsloch auf, welches die Außenseite des Hohlgefäßes umfänglich geschlossen umschließt bzw. das Hohlgefäß durch das Durchgangsloch greift.

Eine weitere vorteilhafte Modifikation der Erfindung sieht vor, dass die Führungsanordnung ein Hohlgefäß umfasst, in dem eine Flüssigkeit eingeschlossen ist, wobei das Steuerelement in der Flüssigkeit eingetaucht ist. Vorzugsweise ist die Flüssigkeit eine viskose bzw. zähflüssige Flüssigkeit wie z. B. ein Mineralöl bzw. ein Hydrauliköl oder dergleichen. Die Flüssigkeit ist in dem Hohlgefäß nach außen dicht eingeschlossen aufgenommen. Insbesondere ist das nahezu gesamte Innere mit der Flüssigkeit gefüllt. Das Steuerelement weist eine größere Dichte als die Flüssigkeit auf, so dass das Steuerelement in der Flüssigkeit nicht schwimmfähig ist, beispielsweise aus einem magnetisierbaren metallischen Material.

Es ist darüber hinaus vorteilhaft, das Antriebsmittel zur angetriebenen Bewegung des Steuerelements vorhanden sind. Mit den Antriebsmitteln ist das Steuerelement vertikal angetrieben bewegbar. Die Antriebsmittel sind vorzugsweise so ausgebildet, eine auf das Steuerelement wirkende Auftriebskraft in einer Flüssigkeit, in welchem das Steuerelement untergebracht ist, zu erhöhen. Dadurch wird das ansonsten in der Flüssigkeit nicht schwimmfähige Steuerelement schwimmfähig, da die Antriebsmittel den statischen Auftrieb des Steuerelements erhöhen. Die Antriebsmittel können zum Beispiel eine Gaszuführung aufweisen, mit welcher ein Gas wie beispielsweise Luft an das Steuerelement angelagert bzw. darin eingebracht wird, zum Beispiel in einem von Abschnitten des Steuerelements umgebenen hohlen Volumenbereich des Steuerelements. Das Steuerelement ist vorzugsweise als nach unten offenes deckel- oder dachförmiges Bauteil gebildet, so dass das Gas von unten einfüllbar ist und dabei eine vorhandene Flüssigkeitsmenge verdrängt und das Gas unterhalb des Steuerelements zumindest zeitweise gefangen ist. In der Folge wird durch die auf das Steuerelement wirkende Auftriebskraft aufgrund des im Steuerelement gefangenen Gasvolumens das Steuerelement schwimmfähig. Das Steuerelement bewegt sich in der umgebenden Flüssigkeit, das z. B. in dem als Führungsanordnung dienenden Hohlgefäß vorhanden ist, nach oben.

Im gekoppelten Zustand von Schwimmerkörper und Steuerelement bei Erreichen der vertikalen Position der Oberfläche der im Behälter obersten Schicht, wie z. B. einer Leichtflüssigkeitsschicht, verliert der Schwimmerkörper seinen Auftrieb in der Leichtflüssigkeit bzw. fällt die bis dahin wirkende Auftriebskraft auf den Schwimmerkörper weg. Die Auftriebswirkung des angekoppelten Steuerelements auf den Schwimmerkörper reicht nun nicht mehr aus, den Schwimmerkörper nach oben bzw. über die Oberfläche der obersten bzw. Flüssigkeits-Schicht im Behälter mitzunehmen. Als Folge wird die Kopplung zwischen dem Steuerelement und dem Schwimmerkörper aufgehoben. Die magnetische Verbindung zwischen dem Steuerelement und dem Permanentmagnet am Schwimmerkörper wird aufgehoben, da die Magnetkräfte nicht ausreichen, dem nach unten wirkenden Gewicht des Schwimmerkörpers, also ohne wirkende Auftriebskraft, in der Behälterflüssigkeit zu überwinden.

In der Position des Schwimmerkörpers zum Zeitpunkt der Trennung vom Steuerelement findet eine Bewegungsunterbrechung statt mit einer anschließenden Bewegungsumkehr aufgrund des Absinkens des Schwimmerkörpers in der Leichtflüssigkeitsschicht, die eine geringere Dichte als die Komponente aufweist, für welche der Schwimmerkörper austariert ist. Mit der Erfassungseinrichtung zur Erfassung der vertikalen Position des Schwimmerkörpers im Behälter, zum Beispiel dem Permanentmagnet am Schwimmerkörper und den Reed-Schaltern an der Führungsanordnung bzw. außen am Hohlgefäß, wird die Position des Schwimmerkörpers zum Zeitpunkt der Trennung vom Steuerelement erkannt bzw. erfasst und ein dazugehöriges Betriebssignal an die übergeordnete Einheit weitergeleitet.

Auch ist es vorteilhaft, das die Antriebsmittel eine Zuführleitung und/oder eine Abführleitung für ein Steuerfluid umfassen, wobei die Zuführleitung und/oder die Abführleitung an die Führungsanordnung anschließt. Das Steuerfluid dient zur Auftrieb-Bewegung des Steuerelements und ist vorzugweise ein Gas wie Luft oder ein anderes Gas. Mit der Zuführleitung bzw. der Abführleitung wird das Steuerfluid in das mit einer Flüssigkeit gefüllte Innere der Führungsanordnung bzw. des Hohlgefäßes von unten eingebracht bzw. aus dem Inneren oben wieder abgeführt. Das von unten beispielsweise bläschenförmig zugeführte Gas steigt in der Flüssigkeit etwas nach oben und trifft von unten auf die offene Seite des Steuerelements. Vorteilhaft weist das Steuerelement einen Aufnahmebereich zur Aufnahme des Steuerfluids auf, um einen Auftrieb des mit dem Steuerfluid beaufschlagten Steuerelements in der Flüssigkeit im Hohlgefäß zu erhöhen. Das Steuerelement erstreckt sich vorzugsweise über den gesamten Querschnitt des Inneren des Hohlgefäßes, so dass sich das eingeblasene Gas unterhalb des vorzugsweise deckelförmigen Steuerelements ansammelt, womit am Steuerelement eine Auftriebskraft wirkt, welche das Steuerelement in der Flüssigkeit im Hohlgefäß nach oben bewegt.

Über z. B. eine oben- bzw. stirnseitige Öffnung im Steuerelement kann eine kleine Menge des Gases nach oben entweichen, jedoch nur in einem vergleichsweise geringen Maß bzw. so langsam, dass das Steuerelement mit dem unterhalb vorhandenen Gasvolumen zunächst mit einer vergleichsweise großen Auftriebskraft vertikal nach oben schwimmend bewegt wird.

Vorzugsweise wird das Steuerfluid bzw. das Gases im Kreislauf geführt, vom vertikal oberen Ende im Hohlgefäß über die Abführleitung bis zu einer Fluid- bzw. Gas-Fördervorrichtung bzw. Gaspumpe und über die Zuführleitung bis in das Hohlgefäß zurück.

Eine weitere bevorzugte Modifikation der Erfindung ist dadurch gekennzeichnet, dass die Antriebsmittel eine Kolben-Zylinder-Einheit insbesondere mit einem doppelt wirkenden Zylinder zur Förderung des Steuerfluids aufweist. Vorzugsweise ist ein Elektromotor zur reversiblen Bewegung des Kolbens der Kolben-Zylinder-Einheit vorhanden.

Weiter ist es vorteilhaft, das eine Kontrolleinheit vorhanden ist, welche Messsignale von der Erfassungseinrichtung verarbeitet und einer übergeordneten Einheit bereitstellt. Die rechnergestützte Kontrolleinheit kann als Elektrosteuerung ausgebildet sein, welche Signale bereitstellt, welche die Grundlage für eine Weiterbverarbeitung der Betriebssignale und/oder zur Anzeige von Informationen zum Betrieb des Behälters bilden. Die elektrische Kontrolleinheit ist vorzugsweise auch zur Kontrolle der Antriebsmittel zur angetriebenen Bewegung des Steuerelements ausgebildet. Die Kontrolleinheit arbeitet insbesondere mit einer rechnergestützten Auswerte- und Anzeigeeinheit und/oder einer übergeordneten Einheit zusammen, welche beispielsweise eine Server-Einheit zur Verbindung mit dem Internet umfasst.

Gemäß einer anderen vorteilhaften Ausbildung der Erfindung kommuniziert die Kontrolleinheit mit einer Auswerteeinheit, welche Daten an einen Internet-Server übermittelt, über welchen eine Alarmierung als E-Mail-Meldung und/oder Push-Meldung an eine beliebige Teilnehmerzahl übertragbar ist.

Die Push-Meldungen lösen mit einem dazugehörigen Anwendungsprogramm bzw. einer Anwendungssoftware bzw. einer dazugehörigen App z. B. "Warn-App" eine Alarmierung wie ein akustisches Warnsignal zum Beispiel ein Sirenenton und/oder ein optisches Signal oder dergleichen aus. Der Teilnehmer bzw. Empfänger erkennt mit der Wahrnehmung der Push-Meldung unmittelbar bzw. sofort, dass eine Alarmmeldung vorliegt und vorrangiger Handlungsbedarf besteht. Mit der Warn-App kann am z. B. mobilen Gerät die Alarmierung quittiert bzw. deren Kenntnisnahme bestätigt werden. Wenn die Alarmierung von einem Teilnehmer bzw. Empfänger quittiert wurde, wird der Name bzw. die Adresse des quittierenden Teilnehmers und ein Zeitpunkt der Quittierung mit einem Zeitstempel mit bzw. in dem Anwendungsprogramm bzw. der Warn-App gespeichert und dauerhaft protokolliert, insbes. für alle Teilnehmer ersichtlich, wer konkret die handelnde bzw. verantwortliche Person ist.

Die Erfindung erstreckt sich außerdem auf eine Abscheideanlage, insbesondere eine Abscheideanlage mit wenigstens einem Abscheidebehälter zur Aufnahme eines Mehrkomponenten-Gemisches, mit einer Vorrichtung gemäß einer der oben genannten Ausbildungen. Die Abscheideanlage ist zum Beispiel als Durchlaufanlage konzipiert, welche mit dem Mehrkomponentengemisch zum Beispiel einem Abwasserstrom beschickt wird und in welcher eine Separation von Komponenten stattfindet, insbesondere aufgrund von Dichteunterschieden der Komponenten in die verschiedenen Fraktionen mit unterschiedlicher Dichte aufgeteilt wird. Die Abscheideanlage weist vorzugsweise mehrere zum Beispiel zwei Behälter auf, welche in Reihe bzw. nacheinander von dem zu trennenden Gemisch durchströmt werden. Das Mehrkomponentengemisch kann verschiedene feste und/oder flüssige und gegebenenfalls gasförmige Komponenten enthalten. In der z. B. als Aufschwimm-und Sedimentationsanlage ausgebildeten Abscheideanlage lassen sich durch Verringerung einer Fließgeschwindigkeit des Mehrkomponentengemisches insbesondere wässrige Phasen mit unterschiedlicher Dichte von Feststoffen separieren, zum Beispiel in eine Feststoffphase, ein wässriges Abwasser und in eine Leichtflüssigkeit. In der Abscheideanlage trennen sich diese Komponenten schichtweise auf in eine am Boden des Behälters sich absetzende Schlammfraktion mit den Feststoffen, eine darüber sich sammelnde wässrige Schicht und in eine auf der wässrigen Phase aufschwimmende Leichtflüssigkeit.

Die Abscheideanlage weist vorzugsweise zumindest zwei kommunizierende Abscheidebehälter in Parallelschaltung oder in Reihenschaltung auf. Bei einer Reihenschaltung umfasst die Abscheideanlage einen von dem gesamten zu behandelnden Mehrkomponentengemisch beschickten ersten Behälter und einen an den ersten Behälter z. B. rohrleitungsgebunden anschließenden zweiten Behälter, in den ein Teilstrom zufließt, der nach Durchströmen des ersten Behälters und Passieren eines Auslaufs des ersten Behälters aus dem ersten Behälter abfließt. Nach Durchströmen des zweiten Behälters fließt die in den beiden Behältern vorgereinigte Fraktion des Mehrkomponentengemischs über einen Auslauf des zweiten Behälters einem Vorfluter oder einer anschließende Einrichtung zu, wie beispielsweise einem Abwassersammelsystem mit anschließender Kläranlage. In den beiden Behältern wird bei entsprechend ausgelegter Anlage nahezu die gesamte Menge an kritischen Feststoffen und der Leichtstoffe wie Leichtflüssigkeiten des Mehrkomponentengemischs zurückgehalten bzw. abgeschieden. Die in der Abscheideranlage zurückgehaltenen unten im Behälter abgesetzte FeststoffKomponente und die oben aufschwimmende Leichtstoff-Komponente müssen von Zeit zu Zeit aus den beiden Behältern insbesondere jeweils separat als Feststoff-Fraktion und als Leichtstoff-Fraktion entnommen und einer gesonderten Behandlung bzw. Verwertung zugeführt werden.

Erfindungsgemäß wird mit Hilfe des Schwimmerkörpers bzw. der Information zur jeweiligen vertikalen Position des Schwimmerkörpers bei einer Messung die vertikale Position der Füllhöhe und der Oberfläche der jeweils schichtweise vorhandenen Komponente erkannt und eine entsprechende Information bzw. ein dazugehöriges Betriebssignal erzeugt. Im betreffenden Behälter der Abscheideanlage sind dadurch ein oberes Niveau der Feststoffschicht, ein oberes Niveau der wässrigen Schicht und ein oberes Niveau der Leichtflüssigkeit bzw. die Behälter-Füllhöhe zu beliebigen Zeiten detektierbar. Bei einem in der Praxis häufig vorkommenden Szenario mit den genannten drei Komponenten-Schichten im Behälter ist mit dem oberen Niveau der Feststoffschicht auch das untere Niveau der darüber liegenden bzw. wässrigen Schicht bestimmbar und mit dem oberen Niveau der wässrigen Schicht auch das untere Niveau der darüber liegenden bzw. Leichtflüssigkeitsschicht bestimmt.

Dabei ist es von Vorteil, dass die Kontrolleinheit ausgebildet ist, mit einer übergeordneten Einheit zusammenzuarbeiten, welche zur Erzeugung einer Warnmeldung ausgelegt ist.

Die Kontrolleinheit ist vorzugsweise in der Nähe außerhalb des betreffenden Behälters vorhanden und mit der Erfassungseinrichtung zur Erfassung der Schwimmerkörper-Schwimmposition im Behälter verbunden. Die übergeordnete Einheit ist in der Regel weiter entfernt von der Kontrolleinheit und mit der Kontrolleinheit entweder leitungsgebunden oder per Funk verbunden. Die übergeordnete Einheit, die bevorzugt eine Rechner-, eine Melde- und eine Anzeigeeinheit wie einen Bildschirm umfasst, verarbeitet die von der Kontrolleinheit erhaltenen Signale bzw. Betriebsinformationen und ermöglicht insbesondere eine Speicherung, eine optische Anzeige und/oder vorzugsweise insbesondere eine Weiterleitung an eine weitere Einheit wie einen Internet-Server und/oder Endgeräte wie ein PC oder ein Smart-Phone.

Schließlich ist es vorteilhaft, dass die übergeordnete Einheit als Fernüberwachungsanlage ausgebildet ist, welche auf einen Internet-Server zurückgreift, der eine Warnmeldung als E-Mail-Meldung und/oder Push-Meldung generiert. Auch möglich sind eine SMS-Meldung oder eine Telefonnachricht.

Die übergeordnete Einheit umfasst vorzugsweise das Internet, wobei der dazugehörige Internet-Server auf verschiedene Endeinheiten bzw. Endgeräte zugreift bzw. zugreifen kann, um Warnmeldungen bzw. andere Betriebsinformationen zur Abscheideanlage zu generieren, die vorzugsweise an einer Endeinheiten auflaufen. Die Endeinheiten sind zum Beispiel eine stationäres Telefon, eine mobiles Telefon bzw. Smart-Phone, ein Computer, eine Überwachungsstation einer privaten, geschäftlichen oder behördlichen Einrichtung. Damit können Warnmeldungen optische und/oder akustisch als Warnsignal bereitgestellt werden, zum Beispiel als SMS-Meldung, E-Mail-Meldung oder dergleichen und/oder als Push-Meldung auf einem vorzugsweise mobilen Endgerät erzeugt werden.

Im Falle einer Push-Meldung erkennt jede kontaktierte Person aus der vorbestimmten Teilnehmergruppe, dass es sich um eine Meldung von dringlicher Natur handelt und greift auf eine dazugehörige App wie die Warn-App bzw. ein entsprechendes Anwendungsprogramm auf dem mobilen Gerät zu. Mit dem Zugriff wird ein Zeitprotokoll generiert, und die Adresse des mobilen Geräts bzw. der quittierenden Person protokolliert bzw. gespeichert und in dem Anwendungsprogramm hinterlegt. Damit ist dauerhaft bzw. nicht reversibel festgelegt und nachvollziehbar, welche Person bzw. welche Einrichtung und zu welchem Zeitpunkt über die Warnmeldung in Kenntnis gesetzt wurde und diese wahrgenommen und quittiert hat. Die betreffende Person oder die verantwortliche Einrichtung ist für alle Teilnehmer simultan erkennbar für die daraus erwachsenen weiteren Aktionen im Zusammenhang mit dem Warnszenario verantwortlich. Damit wird in einer Betriebssituation der Abscheideanlage, die einem Warnszenario zugeordnet ist und welche eine Folgebearbeitung mit hoher Priorität zwingend notwendig macht, eine absolut zuverlässige Problembearbeitung sichergestellt. Es wird außerdem sichergestellt, dass zielgerichtete und zweifelsfreie Verantwortlichkeiten existieren, womit ökologische und ökonomische Schäden für die Allgemeinheit bzw. den Betreiber nahezu sicher vermieden werden.

### Figurenbeschreibung

Weitere Merkmale und Vorteile der Erfindung sind anhand von schematisiert dargestellten Ausführungsbeispielen der Erfindung näher erläutert. Im Einzelnen zeigt:
- Figuren 1 bis 12: eine erfindungsgemäße Abscheideanlage mit einem Behälter im Vertikalschnitt in jeweils unterschiedlichen Betriebszuständen,
- Figur 13: eine schematisch gezeigte Fördereinrichtung der Abscheideanlage gemäß der Figuren 1 bis 12 im Detail,
- Figur 14: die schematisierte Fördereinrichtung im Bereich einer im Ausschnitt gezeigten Behälterwand,
- Figuren 15 bis 17: eine weitere erfindungsgemäße Abscheideanlage mit einem Behälter in drei unterschiedlichen Betriebszuständen und
- Figur 18: eine alternative erfindungsgemäße Abscheideanlage mit einer übergeordneten Einheit und
- Figur 19: eine zu Figur 18 alternative übergeordnete Einheit einer erfindungsgemäßen Abscheideanlage.

Für sich entsprechende Elemente unterschiedlicher Ausführungsbeispiele sind teilweise die gleichen Bezugszeichen verwendet.

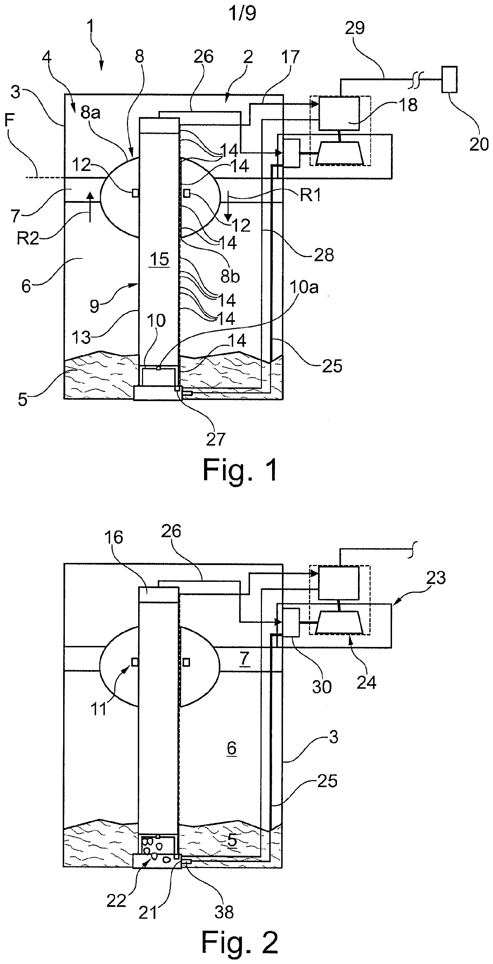

Zur Abscheidung von umweltgefährdenden festen und/oder flüssigen Stoffen weist bei dem ersten Ausführungsbeispiel einer erfindungsgemäßen Abscheideanlage 1 die Abscheideanlage 1 mit einer erfindungsgemäßen Erkennungsvorrichtung 2 gemäß der Figuren 1 bis 12 einen Abscheidebehälter bzw. einen Behälter 3 auf, in den ein Mehrkomponentengemisch wie beispielsweise ein Abwassergemisch einströmt und sich durch Reduzierung der Strömungsgeschwindigkeit horizontal geschichtet in unterschiedliche Komponenten auftrennt. Die im Behälter zurückgehaltenen bzw. abgeschiedenen Komponenten werden gesondert dem Behälter 3 diskontinuierlich entnommen. Die Figuren 1 bis 12 zeigen den gefüllten Behälter 3 im Betrieb schematisch bzw. nicht maßstabsgetreu ohne Zulaufrohr für das Mehrkomponentengemisch ins Innere 4 des Behälters 3 und ohne ein Auslaufrohr für eine im Behälter 3 in einer Zwischenschicht angesammelte Flüssigkeit 6 zum Beispiel ein Abwasseranteil.

Im Betrieb des Behälters 3 schwimmt auf der wässrigen Flüssigkeit 6 eine im Behälter 3 zurückgehaltene Leichtstoffkomponente wie eine Leichtflüssigkeit 7 bzw. zum Beispiel ein Benzin oder ein Öl oder eine andere Komponente eines Mehrkomponentengemisches, die eine geringe Schichtdicke und eine im Vergleich zur wässrigen Flüssigkeit 6 niedrigere Dichte aufweist.

Oberhalb eines Bodens des Behälters 3 ist ein Feststoff 5 als Schlammschicht vorhanden, der ebenfalls im Behälter 3 zurückgehalten wird und eine zur Flüssigkeit 6 größere Dichte besitzt.

Die Abscheideanlage 1 umfasst die nicht realistisch sondern vergrößert dargestellte erfindungsgemäße Erkennungsvorrichtung 2, mit einem im Inneren 4 des Behälters 3 vorhandenen Messschwimmer, der hier beispielhaft als hohler Schwimmerkörper 8 mit einem festen dicht geschlossenen Gehäuse 8a ausgebildet ist. Der Schwimmerkörper 8 ist im Behälter 3 entlang einer im Inneren 4 befindlichen Führungsanordnung 9 in vertikaler Richtung nach unten gemäß R1 und in Richtung R2 nach oben frei beweglich, in Richtung quer dazu bzw. in horizontaler Richtung jedoch festgelegt. Hierfür umfasst die Führungsanordnung 9 ein aufrecht stehendes geschlossenes Rohr 13 in Form eines Hohlzylinders. Die Führungsanordnung 9 mit dem Rohr 13, in dem eine Flüssigkeit 15 eingefüllt ist, erstreckt sich vom Boden des Behälters 3 nach oben bis nahe unterhalb eines oberen Randes des Behälters 3. Ein Flüssigkeitsspiegel der Flüssigkeit 15 liegt oberhalb einer im Betrieb des Behälters 3 maximal erreichbare von dem Mehrkomponentengemisch eingenommene Füllhöhe F im Behälter 3.

Im Rohr 13, das mit der viskosen Flüssigkeit 15 wie einem Hydrauliköl nahezu komplett gefüllt ist, ist ein Steuerelement 10 aus einem magnetisierbaren Metallmaterial untergebracht. Oberhalb der Flüssigkeit 15 befindet sich ein Gaspolster 16. Das nach unten offene deckelförmige Steuerelement 10 ist mit geringem Spaltabstand im Rohr 13 vertikal beweglich und weist in seiner Oberseite eine kleine Öffnung bzw. einen Durchlass 10a auf. In den Figuren 1 und 2 befindet sich das Steuerelement 10 in einer versenkten unteren Endlage auf einem Boden des Rohrs 13 und wirkt mit einem als Reed-Kontakt bzw. Reed-Schalter ausgebildeten Endlageschalter 27 zusammen, womit die untere Endlage des Steuerelements 10 detektierbar ist. Über ein mit dem Endlageschalter 27 verbundenes Elektrokabel 28 wird die Information zur Endlage des Steuerelements 10 an eine rechnergestützte Kontrolleinheit der Abscheideanlage 1 übertragbar, die den Betrieb der Abscheideanlage 1 kontrolliert und außerhalb des Behälters 3 in dessen Nahbereich vorhanden und als Elektrosteuerung 18 ausgebildet ist.

Die Führungsanordnung 9 dient auch dem Schwimmerkörper 8 zur Bewegungsführung in vertikaler Richtung R1 und R2. Hierfür weist der Schwimmerkörper 8 eine mittige durchgehende Durchlassöffnung 8b auf, durch welche das Rohr 13 mit geringem Abstand zur Durchlassöffnung 8b durchreicht, so dass der Schwimmerkörper 8 umfänglich geschlossen außen das Rohr 13 umschließt.

Eine Permanentmagnetanordnung 11 weist einen im luft- bzw. gasgefüllten hohlen Schwimmerkörper 8 fest angeordneten Permanentmagnet 12 auf, der zum Beispiel ringförmig um die Durchlassöffnung 8b vorhanden ist. Damit ist in jeder möglichen Drehstellung des Schwimmerkörpers 8 eine Magnetwirkung erfüllt. Der Permanentmagnet 12 ist für ein Zusammenwirken mit einem jeweiligen Reed-Kontakt von einer Mehrzahl von Reed-Kontakten 14 außen an dem Rohr 13 zusammen, so dass bei horizontal benachbarter Lage des Permanentmagnet 12 und eines Reed-Kontakts 14 ein Schaltsignal nach außen zur Elektrosteuerung 18 übertragen wird, was mit einem Sondenkabel 17 erfolgt, das mit den Reed-Kontakten 14 und der Elektrosteuerung 18 verbunden ist. Die mehreren Reed-Kontakte 14 sind in vertikal gleichmäßigen vorgegebenen Abständen entlang der Rohr-Längsachse außen an dem Rohr 13 befestigt und so abgestimmt, dass immer nur genau ein benachbarter auf einer gleichen vertikalen Höhe zum Permanentmagnet 12 sich befindende Reed-Kontakt 14 vom Permanentmagnet 12 geschaltet wird. Damit kann jede vertikale Position des Schwimmerkörpers 8 entlang des Rohrs 13 erfasst bzw. erkannt und ein entsprechendes Signal an die Elektrosteuerung 18 übertragen und dort verarbeitet bzw. mittels einer Verbindung 29 an eine rechnergestützte Auswerte- und Anzeigeeinheit 20 und/oder einer damit verbundenen übergeordnete Einheit weitergegeben werden.

Der Schwimmerkörper 8 ist so vorgegeben austariert, dass er auf der Flüssigkeit 6 aufschwimmt, jedoch in der Leichtflüssigkeit 7 untergeht. Damit bildet der Schwimmerkörper 8 gemäß seiner Schwimmposition die vertikale Position der Oberfläche der Flüssigkeit 6 ab bzw. liefert der Elektrosteuerung 18 eine entsprechende Positionsinformation. Im Betrieb der Abscheideanlage 1 sammelt sich immer mehr Leichtflüssigkeit 7 im Behälter 3 an, so dass bei zunehmender Schichtdicke der Leichtflüssigkeit 7 bei konstanter maximaler Füllhöhe F im Inneren 4, was durch eine Ablaufniveau der nicht dargestellten Auslassleitung bestimmt ist, der Schwimmerkörper 8 der nach unten wandernden Oberfläche der Flüssigkeit 6 folgt.

Auch die Schichthöhe des sedimentierten Feststoffs 5 wird im Betrieb mit der Zeit größer.

Für einen dauerhaft sicheren und vorteilhaften Betrieb der Abscheideanlage sind weitere Informationen wie insbesondere zu Niveaus der schichtweise vorhandene Komponenten 5, 6 und 7 im Inneren 4 des Behälters 3 notwendig, was mit der Erkennungsvorrichtung 2 vorteilhaft möglich ist.

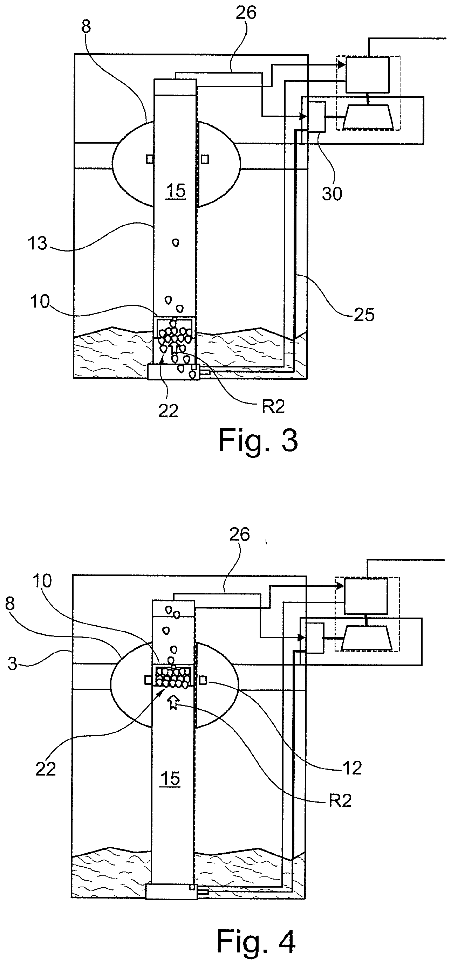

Zur Erkennung der weiteren Oberflächenniveaus bzw. der Oberfläche der Leichtflüssigkeit 7 in einer Betriebs-bzw. Messphase "Füllhöhen-Messung" und des abgesetzten Schlamms bzw. Feststoffes 5 wird der vorhandene Schwimmerkörper 8 genutzt. Um den Schwimmerkörper 8 aus seiner austarierten Schwimmposition auf der Flüssigkeit 6 gemäß Figur 1 nach oben und nach unten bewegen zu können, ist das Steuerelement 10 vorgesehen. Das magnetisierbare bzw. magnetische Steuerelement 10 ist berührungslos mit dem Schwimmerkörper 8 koppelbar, sobald das Steuerelement 10 und der Permanentmagnet 12 zumindest nahezu sich auf gleicher vertikaler Position befinden (s. Figur 4).

Damit das Steuerelement 10 aus der Endlage gemäß Figur 1 nach oben gebracht werden kann, wird über eine vorprogrammierte Taktung Gas 22 von unten über einen Einlass 21 im Rohr 13 in das Innere des Rohres 13 zugeführt. Hierzu wird über eine im Bereich des unteren Endes des Rohrs 13 anschließende und ins Innere des Rohrs 13 mündende Gaszuführleitung 25 das Gas 22 wie z. B. Luft unterhalb des Steuerelements 10 dosiert zugeführt bzw. eingeperlt, so dass die gebildeten Gasbläschen nach oben steigen und sich in einem Volumen des Steuerelements 10 bzw. unterhalb des Steuerelements 10 ansammeln. Auf das Steuerelement 10 wird aufgrund der unterhalb des Steuerelements 10 gefangenen Gasmenge eine Auftriebswirkung erzeugt, welche das Steuerelement 10 in dem Rohr 13 in der Flüssigkeit 15 nach oben bewegt (s. Figur 3). Sobald das Steuerelement 10 seine untere Endlage verlassen hat, wird die dazugehörige Information über den Endlageschalter 27 an die Elektrosteuerung 18 übermittelt, so dass erkannt wird, dass das Steuerelement 10 unterwegs ist.

Eine vergleichsweise geringe Gasmenge im Steuerelement 10 tritt kontinuierlich durch den Durchlass 10a nach oben aus.

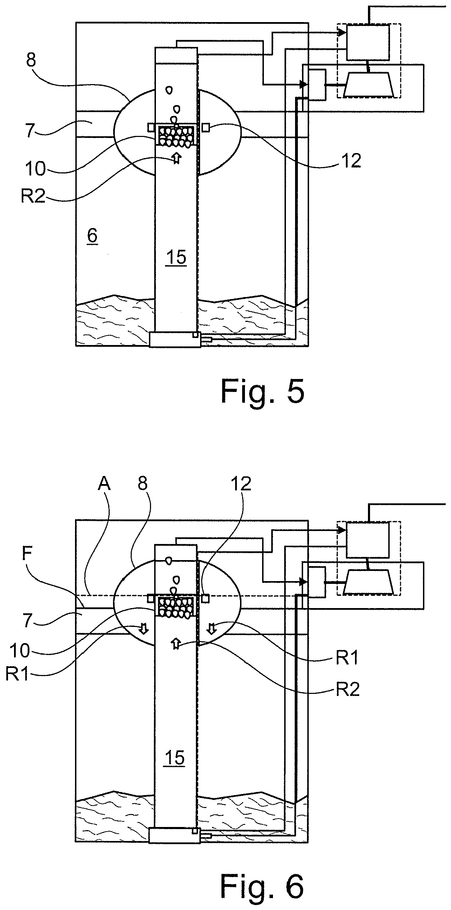

Bei Erreichen der vertikalen Höhe des Permanentmagneten 12 findet eine berührungslose Kopplung von Steuerelement 10 und Schwimmerkörper 8 aufgrund der wirkenden Magnetkräfte des Permanentmagneten 12 statt. Das Steuerelement 10 ist dann mit dem Schwimmerkörper 8 magnetisch verbunden. Der Schwimmerkörper 8 wird durch den ausreichend hohen Auftrieb auf das Steuerelement 10 aus der austarierten bzw. stationären Schwimmposition gebracht und vertikal nach oben in Richtung R2 bewegt (s. Figur 5).

Der Schwimmerkörper 8 mit dem Steuerelement 10 passieren die Schicht der Leichtflüssigkeit 7, wobei der Auftrieb auf den Schwimmerkörper 8 abnimmt, und erreichen die Flüssigkeitsoberfläche F der Leichtflüssigkeit 7 (s. Figur 6), wobei der Schwimmerkörper 8 mit dem Steuerelement 10 aus der Leichtflüssigkeit 7 wie z. B. Benzin heraus kommt und bis maximal zur Linie A steigt, die nur minimal oberhalb der Oberfläche F der Leichtflüssigkeit 7 liegt. In Figur 6 ist der Abstand zwischen F und A nicht maßstäblich gezeigt, sondern vergrößert angedeutet. Damit verliert der Schwimmerkörper 8 weiter an Auftrieb. Als Folge entkoppelt sich bzw. trennt sich der Schwimmerkörper 8 aufgrund seines Gewichts bzw. aufgrund der Schwerkraft von dem Steuerelement 10, da die Magnetkräfte überwunden werden und der Schwimmerkörper 8 zurückfällt bzw. nach unten in Richtung R1 absinkt bis zur Trennschicht zwischen der oberen Leichtflüssigkeit 7 und er darunter vorhandene Flüssigkeit 6, wo der Schwimmerkörper 8 wieder aufschwimmt. Die Elektrosteuerung 18 hält die Positionen des Schwimmerkörpers 8 mittels der Reed-Kontakte 14 fest. Daraus kann die Schichthöhe der obersten Flüssigkeitsschicht bzw. der Leichtflüssigkeit 7 ermittelt bzw. errechnet werden.

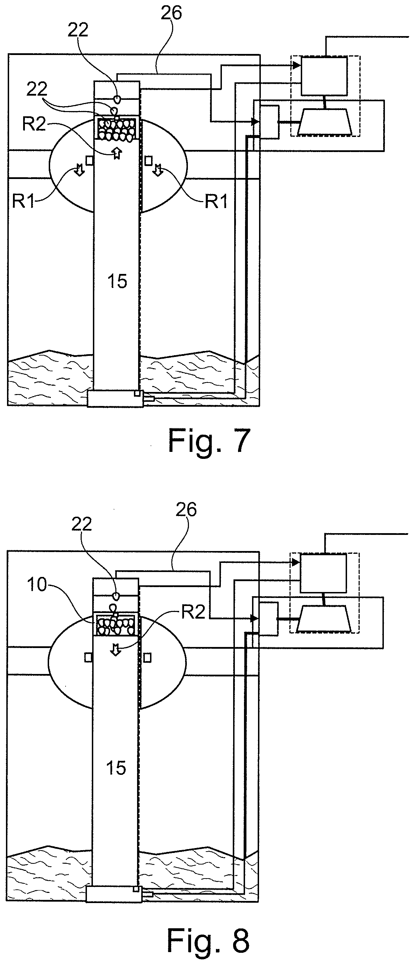

Das Steuerelement 10 steigt nach der magnetischen oberen Entkopplung von dem Schwimmerkörper 8 in der Flüssigkeit 15 noch ein Stück weiter in Richtung R2 nach oben aufgrund des noch vorhandenen Auftriebs durch Gasbläschen etwas weiter nach oben (s. Figuren 6, 7) bis aufgrund des weiter durch den Durchlass 10 nach oben entweichende Gases 22 der auf das Steuerelement 10 wirkende Auftrieb sich verringert und das Steuerelement 10 in der Hydraulikflüssigkeit 15 wieder in Richtung R2 absinkt (s. Figur 8).

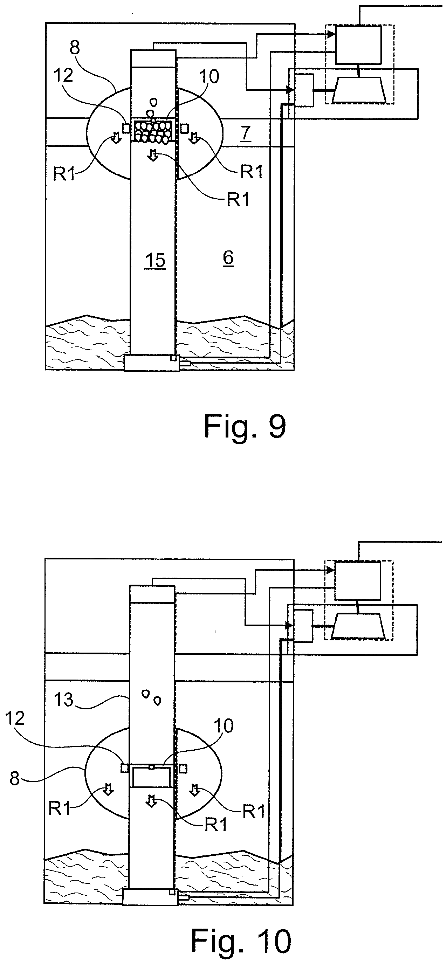

Beim Absinken des Steuerelements 10 mit dem Erreichen der vertikalen Position des auf der Flüssigkeit 6 schwimmenden Schwimmerkörpers 8 beginnt die Betriebsphase "Schlamm- bzw. Feststoffschicht-Messung". Es findet eine erneute magnetische Kopplung des Steuerelements 10 und des Schwimmerkörpers 8 aufgrund der auf das Steuerelement 10 wirkenden Magnetkräfte des Permanentmagnets 12 statt. Da das Steuerelement 10 aufgrund des nach oben entweichenden Gases keinen wirksamen Auftrieb in der Flüssigkeit 15 mehr erfährt und auch der Auftrieb des Schwimmerkörpers 8 nicht ausreicht, den mit dem Steuerelement 10 verbundenen Schwimmerkörper in der Schwebe zu halten, sinken der Schwimmerkörper 8 und das Steuerelement 10 gekoppelt bzw. gemeinsam nach unten in Richtung R1 (s. Figuren 9 und 10).

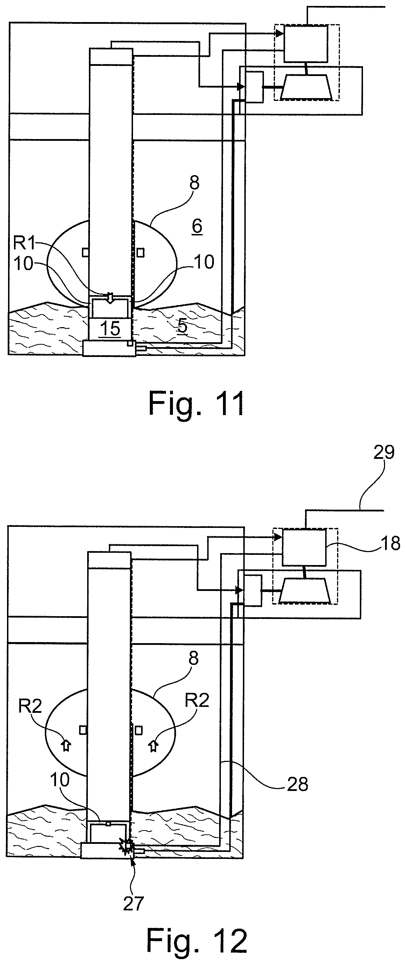

Mit dem Absinken erreicht der Schwimmerkörper 8 unterseitig die Oberfläche der Schlammschicht bzw. des abgesetzten Feststoffes 5. Die Absinkbewegung des Schwimmerkörpers 8 wird von der Feststoffschicht gestoppt. Es findet eine untere Entkopplung von Schwimmerkörper 8 und Steuerelement 10 aufgrund der Absink-Blockade des Schwimmerkörpers 8 bzw. aufgrund des Eigengewichtes des Steuerelements 10 statt und das Steuerelement 10 sinkt weiter in der Hydraulikflüssigkeit 15 nach unten (s. Figur 11). Der vom Gewicht des Steuerelements 10 entkoppelte Schwimmerkörper 8 steigt in der Flüssigkeit 6 bis zu seiner austarierten Schwimmposition oben auf der Flüssigkeit 6.

Das Steuerelement 10 sinkt nach unten bis zum Erreichen seiner Endlage, was mit dem Endlageschalter 27 von der Elektrosteuerung 18 registriert wird (s. Figur 12). Die Elektrosteuerung 18 erhält die Information "Steuerelement hat Endlage erreicht". Das Ende der Feststoffschicht-Messung wird festgestellt bzw. der Messzyklus ist beendet. Die Abscheideanlage 1 kehrt in die Ausgangsbetriebsart "Leichtflüssigkeitswächter" zurück, wobei sich die Ausgangssituation der Abscheideanlage 1 gemäß Figur 1 wieder einstellt.

Der gesamte Weg des Schwimmerkörpers 8 während eines wie oben beschriebenen Messzyklus zur Ermittlung der Gesamtfüllhöhe F und der Feststoffschicht-Höhe des Behälters 3 mit den Betriebszuständen ausgehend von Figur 1 über die Zustände gemäß der Figuren 2 bis 12 und zurück zum Zustand gemäß Figur 1 wird mit Hilfe der Reed-Kontakte 14 von der Elektrosteuerung 18 registriert und überwacht. Dabei wird die tiefste vertikale Position, die vom Schwimmerkörper 8 erreicht wird, der vertikalen Position bzw. Höhe der Schlamm- bzw. Feststoffschicht zugeordnet.

Im Normal- bzw. "Leichtflüssigkeitswächter"-Betrieb der Abscheideanlage 1 wird mittels der Elektrosteuerung 18 zum Beispiel einmal pro Minute den Reed-Kontakten 14 ein elektrischer Messstrom in einer vergleichsweise kurzen Messzeit von zum Beispiel einer Millisekunde zugeführt, so dass in der Messzeit ein Betriebssignal bzw. ein Sondensignal zur Positionserkennung des Schwimmerkörpers 8 an die Elektrosteuerung 18 bzw. an die Auswerte- und Anzeigeeinheit 20 übertragbar ist. Dazwischen bzw. bis nach Ablauf der Minute findet kein Stromverbrauch statt. Damit wird trotz Dauerüberwachung der Anlage ein vergleichsweise geringer Stromverbrauch möglich, was insbesondere vorteilhaft einen Batterie-Betrieb der Abscheideanlage 1 bzw. der Elektrosteuerung 18 ermöglicht.

Während einer vergleichsweise kurzen und zu vorgebbaren Zeitabständen stattfindenden Messphase, welche die "Füllhöhen-Messung" und die anschließende "Schlammschicht-Messung" umfasst, findet zur umfassenden Erkennung der Position des Schwimmerkörpers 8 die Bestromung der Reed-Kontakte 14 mit einem Messstrom über z. B. eine Millisekunde in vergleichsweise kurzen Zeitabständen von zum Beispiel einmal pro Sekunde statt.

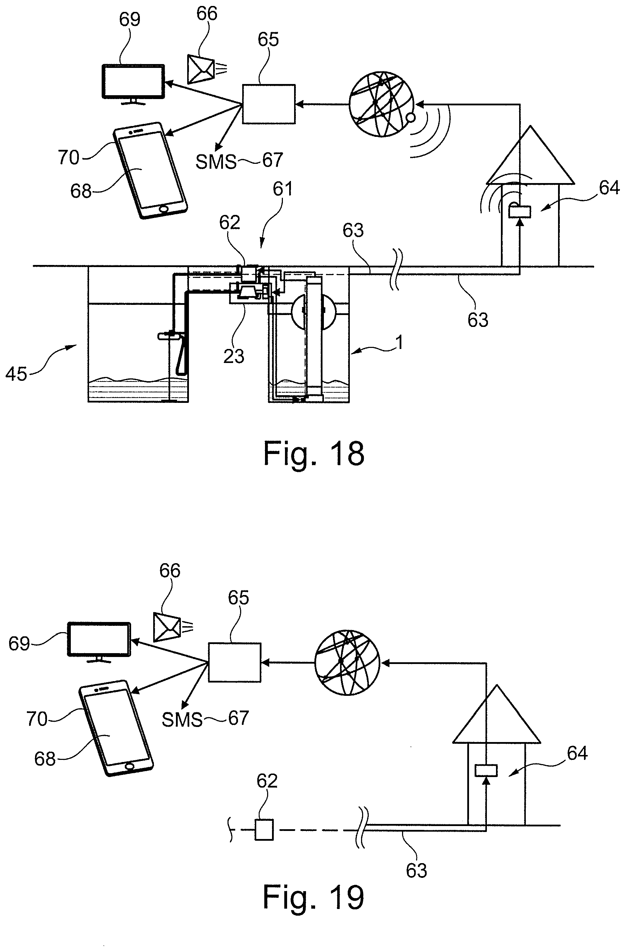

Mit der Erkennung eines vorgegebenen maximal tolerierbaren Füllniveaus F bzw. eines maximal tolerierbaren Feststoffniveaus des Feststoffes 5 wird mit der Auswerte- und Anzeigeeinheit 20 und/oder einer mit dieser in Verbindung stehenden übergeordneten Einheit, was im Zusammenhang mit den Figuren 18 und 19 erläutert ist, eine Alarmierung mit einer qualifizierten Meldung bzw. eine Warnmeldung bzw. ein Warnsignal erzeugt.

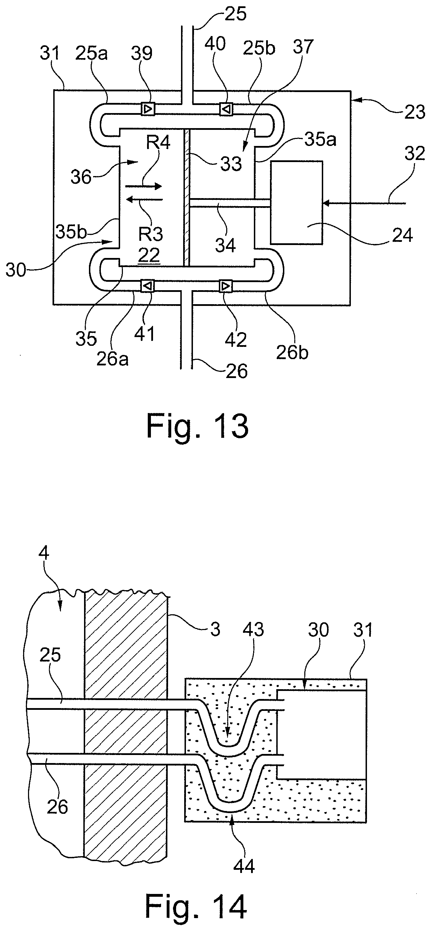

Zum Zuführen von Gas 22 bzw. von Luft in das Rohr 13 bzw. zum Steuerelement 10 und zur Rückführung des Gases 22 vom Gaspolster 16 im Rohr 13 ist eine außerhalb des Behälters 3 positionierte pneumatische Fördereinrichtung 23 mit einer Kolben-Zylinder-Einheit 30 und einem Antriebsmotor 24 vorgesehen, wobei Gas-Zuführleitungen 25, 25a, 25b und Gas-Abführleitungen 26, 26a, 26b einerseits unten und oben am Rohr 13 und andererseits an der Kolben-Zylinder-Einheit 30 angeschlossen sind. In Figur 13 sind die Einzelheiten der Fördereinrichtung 23 stark schematisiert dargestellt. Die Fördereinrichtung 23 umfasst außerdem ein die Kolben-Zylinder-Einheit 30 und den Antriebsmotor 24 umschließendes Gehäuse 31, durch welches ein von der Elektrosteuerung 18 kommendes Elektrokabel 32 zum Antriebsmotor 24 führt.

Die nach dem Funktionsprinzip als doppelt wirkender Zylinder ausgestaltete Kolben-Zylinder-Einheit 30 weist einen innerhalb eines Zylinders 35 gemäß der Richtungspfeile R3 und R4 hinund herbewegbaren Kolben 33 mit einer Kolbenstange 34 auf. Die Kolbenstange 34 durchgreift abgedichtet eine Stirnwand 35a des Zylinders 35.

Gemäß der Kolben-Verschiebestellung unterteilt der gasdicht an der Innenseite einer Zylinderwand geführt anschließende Kolben 33 das gasgefüllte Innenvolumen des Zylinders 35 in eine der Kolbenstange 34 abgewandte erste Kammer 36 und eine zweite Kammer 37 innerhalb des Zylinders 35.

Bei einem Steuerbefehl der Elektrosteuerung 18 "Schlammschicht-Messung" wird der Antriebsmotor 24 angesteuert und der Kolben 33 aus der Kolben-Ausgangsstellung anliegend innen an der Stirnwand 35a bzw. in Figur 13 von rechts, in welcher die Kolbenstange 34 vollständig aus dem Inneren des Zylinders 35 herausgezogen ist, in Richtung R3 verschoben. Die Gasmenge in der ersten Kammer 36 entweicht durch die an die erste Kammer 36 angeschlossenen Gas-Zuführleitungen 25a und 25 und wird zum bodennahen Einlass 21 am Rohr 13 gefördert. Die Gas-Zuführleitung 25 mündet über eine Gasdüse 38 (s. Figur 2), in der eine Rückschlagventil integriert ist, in das mit dem Hydrauliköl 15 gefüllte Innere unten an dem Rohr 13. Das zugeführte Gas 22 füllt das Steuerelement 10 unterseitig.

Der Zylinder 35 ist so bemessen, dass mit der Bewegung des Kolbens 33 von der Stirnwand 35a bis zu einer gegenüberliegenden Stirnwand 35b genug bzw. eine vorbestimmte Gasmenge zugeführt wird, so dass auf das Steuerelement 10 in der Flüssigkeit 15 ein Auftrieb wirkt, dass sich das Steuerelement 10 nach oben in Richtung R2 bewegt.

Damit in dem Rohr 13 bzw. im Gaspolster 16 kein Überdruck und in der zweiten Kammer 37 kein Unterdruck entsteht, wird von dem Gaspolster 16 oben im Rohr 13 eine überschüssige Gasmenge über die Gas-Abführleitungen 26 und 26b in die zweite Kammer 37 zurückgeführt. Es wird damit ein Druckausgleich erreicht.

In den Gas-Zuführleitungen 25a, 25b und in den Gas-Abführleitungen 26a, 26b sind Ventile 39, 40 und 41, 42 vorhanden, die in nur eine Strömungsrichtung einen Durchlass freigeben, wobei in Richtung der angedeuteten Spitze des jeweiligen Ventils der Durchlass möglich ist.

Figur 14 zeigt schematisiert und vergrößert einen Ausschnitt des Behälters 3 der Abscheideanlage 1 mit der Kolben-Zylinder-Einheit 30 mit angeschlossener Gas-Zuführleitung 25 und Gas-Abführleitung 26, welche durch eine Wand des Behälters 3 durchführen, mit je einem als Schutzschlinge 43, 44 ausgebildeten Abschnitt. Mit den zum Beispiel syphonartigen Schutzschlingen 43, 44 wird eine atmosphärische Trennung zwischen dem Inneren 4 des Behälters 3, das möglicherweise ein explosionsfähiges Gas oder Gasgemisch enthält, und der Kolben-Zylinder-Einheit 30 und einer anschließenden Einheit wie einem Antrieb oder der Elektrosteuerung sicher erreicht. Damit wird in einem möglichen Szenario wie einer Undichtigkeit bzw. einer Beschädigung bzw. Bruches der Gas-Zuführleitung 25 und/oder der Gas-Abführleitung 26 ein Eindringen eines explosionsfähigen Gases in die genannten Einheiten verhindert und einer Explosionsgefahr entgegen gewirkt.

Eine schematische alternative erfindungsgemäße Abscheideanlage 45 mit einer Erkennungsvorrichtung 2 und einer Warnanlage (s. Figuren 18, 19) und einem Behälter 46, in dem ein Feststoff 47 und darüber eine Flüssigkeit 48 geschichtet enthalten sind, zeigt Figur 14. Entlang einer vertikalen Führungsstange 49, die vom Boden des Behälters 46 bis über ein maximal tolerierbares Feststoffniveau 50 reicht, ist ein Schwimmerkörper als Ballonschwimmer 51 nach unten in Richtung R1 und nach oben in Richtung R2 verschieblich angebracht. Der Ballonschwimmer 51 weist eine elastische expandierbare Hülle 52 auf, die über einen Gasschlauch 53 mit einem Gas- oder Flüssigkeits-Kompressor 54 verbunden ist, der außerhalb des Behälters 46 positioniert ist.

Im Ballonschwimmer 51 ist ein Permanentmagnet 55 fest vorhanden, der mit je einem von entlang der Führungsstange 49 vertikal beabstandeten Reed-Kontakten 14 zusammenwirkt, die über ein selbstsicherndes Elektrokabel 56 mit einer rechnergestützten Kontrolleinheit bzw. einer Steuer- und Messeinheit 57 außerhalb des Behälters 46 verbunden ist, welche über eine Leitung 58 mit einer übergeordneten Einheit und/oder mit einer Auswerte- und Anzeigeeinheit 59 kommuniziert.

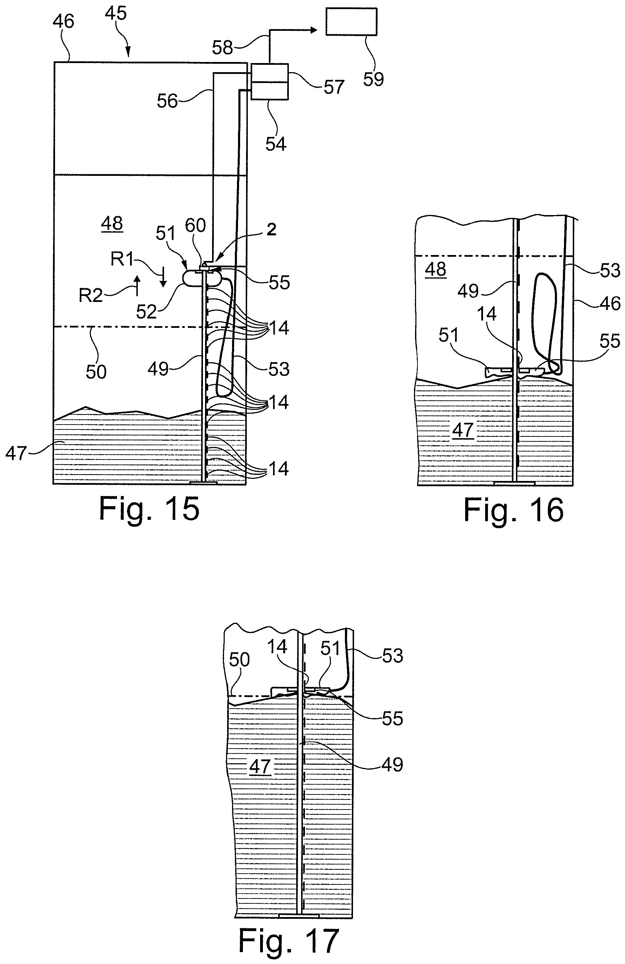

Im aufgeblasenen Zustand des Ballonschwimmers 51 bzw. der Ballonsonde gemäß Figur 15, im Betrieb der Abscheideanlage 45, steigt der Ballonschwimmer 51 bis zu einem oberen Anschlag 60 an der Führungsstange 49 in der Flüssigkeit 48 z.B. ein Abwasser. Wird der Ballonschwimmer 51 evakuiert bzw. ein darin befindliches Gas herausgesaugt, sinkt der Ballonschwimmer 51 nach unten bis auf die Oberfläche der vom Feststoff 47 gebildeten Schicht (s. Figur 16), so dass der dort vorhandene Reed-Kontakt 14 ausgelöst bzw. geschaltet wird und über das Elektrokabel 56 eine dazugehörige Information bzw. ein Betriebssignal an die Auswerte- und Anzeigeeinheit 59 übermittelt wird. Damit ist die Feststoff-Schichthöhe ermittelbar.

Nach dem Messvorgang wird der Ballonschwimmer 51 wieder mit Gas befüllt und steigt zum Anschlag 60 nach oben. Mit der entsprechenden Erkennung von vorgegebenen Mess- bzw. Niveauwerten wie insbes. dem Erreichen eines maximal tolerierbaren Feststoffniveaus 50 gemäß Figur 17 wird mit der Auswerte- und Anzeigeeinheit 59 und/oder einer mit dieser in Verbindung stehenden übergeordneten Einheit (nicht gezeigt) eine Alarmierung mit einer qualifizierten Meldung bzw. eine Warnmeldung bzw. ein Warnsignal erzeugt (s. Figuren 18, 19).

Eine weitere erfindungsgemäße Abscheideanlage 61 mit Warnanlage ist in Figur 18 schematisch dargestellt. Die Abscheideanlage 61 entspricht einem Verbund gemäß der Abscheideanlage 1 und der Abscheideanlage 45, durch welche in Reihe geschaltet ein Mehrkomponentengemisch durchflossen wird, mit einer gemeinsamen Kontrolleinheit 62 und einer gemeinsamen Gas-Fördereinrichtung 23.

Die Kontrolleinheit 62 steht über eine Leitung 63 mit einer Auswerte- und Anzeigeeinheit 64 in Verbindung. Alternativ ist eine Funkverbindung, die zum Beispiel nicht als GPRS oder GSM-Übertragung ausgebildet ist, möglich.

Die Auswerte- und Anzeigeeinheit 64 schickt entsprechende Daten auf einen Internetserver 65, was gemäß Figur 18 per Funkübertragung oder gemäß Figur 19 kabelgebunden erfolgt.

Auf dem Internetserver 65 werden die gewonnenen Daten gespeichert und im Alarmfall eine von der Auswerteeinheit 64 generierte Alarmmeldung in eine E-Mail-Meldung 66 und/oder eine SMS-Meldung 67 bzw. einen short message service und/oder eine Pull- bzw. Push-Meldung 68, dargestellt auf einem stationären Gerät 69 wie einem PC oder einem mobilen Gerät vorzugsweise auf einem Smart-Phone 70, umgewandelt.

Die Meldungen können an eine beliebig große Teilnehmerzahl bzw. Empfänger bzw. Empfangsgeräte versendet werden.

Die Push-Meldungen lösen mit einem dazugehörigen Anwendungsprogramm bzw. einer Anwendungssoftware bzw. einer dazugehörigen App z. B. "Warn-App" eine Alarmierung wie ein akustisches Warnsignal zum Beispiel ein Sirenenton und/oder ein optisches Signal oder dergleichen aus. Der Teilnehmer bzw. Empfänger erkennt mit der Wahrnehmung der Push-Meldung unmittelbar bzw. sofort, dass eine Alarmmeldung vorliegt und vorrangiger Handlungsbedarf besteht. Mit der Warn-App kann am z. B. mobilen Gerät die Alarmierung quittiert bzw. deren Kenntnisnahme bestätigt werden. Wenn die Alarmierung von einem Teilnehmer bzw. Empfänger quittiert wurde, wird der Name bzw. die Adresse des quittierenden Teilnehmers und ein Zeitpunkt der Quittierung mit einem Zeitstempel mit bzw. in dem Anwendungsprogramm bzw. der Warn-App gespeichert und dauerhaft protokolliert, insbes. für alle Teilnehmer ersichtlich, wer konkret die handelnde bzw. verantwortliche Person ist.

Mit der erfindungsgemäßen Warnanlage mit den Komponenten 62 bis 70 ist es vorteilhaft auch möglich, eine herkömmliche Alarmierung auszulösen zum Beispiel automatisiert Telefonanrufe auszulösen und zu tätigen oder eine SMS zu generieren.

### Bezugszeichenliste

- 1: Abscheideanlage
- 2: Erkennungsvorrichtung
- 3: Behälter
- 4: Innere
- 5: Feststoff
- 6: Flüssigkeit
- 7: Leichtflüssigkeit
- 8: Schwimmerkörper
- 8a: Gehäuse
- 8b: Durchlassöffnung
- 9: Führungsanordnung
- 10: Steuerelement
- 10a: Durchlass
- 11: Permanentmagnetanordnung
- 12: Permanentmagnet
- 13: Rohr
- 14: Reed-Kontakt
- 15: Flüssigkeit
- 16: Gaspolster
- 17: Sondenkabel
- 18: Elektrosteuerung
- 19: Steuerleitung
- 20: Anzeige-/Auswerteeinheit
- 21: Einlass
- 22: Gas
- 23: Fördereinrichtung
- 24: Antriebsmotor
- 25: Gas-Zuführleitung
- 25a, 25b: Gas-Zuführleitung
- 26: Gas-Abführleitung
- 26a, 26b: Gas-Abführleitung
- 27: Endlageschalter
- 28: Elektrokabel
- 29: Verbindung
- 30: Kolben-Zylinder-Einheit
- 31: Gehäuse
- 32: Elektrokabel
- 33: Kolben
- 34: Kolbenstange
- 35: Zylinder
- 35a, 35b: Stirnwand
- 36, 37: Kammer
- 38: Gasdüse
- 39-42: Ventil
- 43, 44: Schutzschlinge
- 45: Abscheideanlage
- 46: Behälter
- 47: Feststoff
- 48: Flüssigkeit
- 49: Führungsstange
- 50: Feststoffniveau
- 51: Ballonschwimmer
- 52: Hülle
- 53: Gasschlauch
- 54: Kompressor
- 55: Permanentmagnet
- 56: Elektrokabel
- 57: Steuer/ Messeinheit
- 58: Leitung
- 59: Auswerte-/Anzeigeeinheit
- 60: Anschlag
- 61: Abscheideanlage
- 62: Kontrolleinheit
- 63: Leitung
- 64: Auswerte-/Anzeigeeinheit
- 65: Internet-Server
- 66: E-Mail-Meldung
- 67: SMS-Meldung
- 68: Push-Meldung
- 69: Gerät
- 70: Smart-Phone

## Patentansprüche

1. Vorrichtung (2) zur Erkennung einer vertikalen Position einer Oberfläche einer Komponente von mehreren in einem Behälter (3, 46) vorhandenen Komponenten unterschiedlicher Dichte, welche im Betrieb des Behälters (3, 46) im Behälter (3, 46) schichtweise vorhanden sind, wobei die Vorrichtung (2) einen auf der Komponente schwimmfähigen Schwimmerkörper (8, 51) aufweist, der im Behälter (3, 46) vertikal bewegbar unterbringbar ist, so dass im Betrieb des Behälters (3, 46) anhand einer Schwimmerkörper-Schwimmposition auf der Komponente zumindest die vertikale Position der Oberfläche der Komponente im Behälter (3, 46) erkennbar ist, **dadurch gekennzeichnet, dass** die Vorrichtung (2) ein entlang des Bewegungsweges des Schwimmerkörpers (8) bewegbares Steuerelement (10) aufweist, wobei zur Beeinflussung der vertikalen Position des Schwimmerkörpers (8), das Steuerelement (10) mit dem Schwimmerkörper (8) zeitweise koppelbar ist, so dass im gekoppelten Zustand von Schwimmerkörper (8) und Steuerelement (10) der Schwimmerkörper (8) aus seiner durch die Schwimmerkörper-Schwimmposition vorgegebenen Vertikalposition herausbewegbar und in eine weitere Vertikalposition des Schwimmerkörpers (8) im Behälter (3) bringbar ist.

2. Vorrichtung nach dem Oberbegriff des Anspruchs 1, insbesondere nach Anspruch 1, **dadurch gekennzeichnet, dass** der Schwimmerkörper (51) eine formveränderliche Hülle (52) aufweist, welche einen Aufnahmeraum für ein Medium umschließt, wobei über an den Schwimmerkörper (52) heranreichende Leitungsmittel das Medium in den Aufnahmeraum des Schwimmerkörpers (51) wahlweise einfüllbar und abführbar ist.

3. Vorrichtung nach Anspruch 1 oder Anspruch 2, **dadurch gekennzeichnet, dass** eine Erfassungseinrichtung (2) zur Erfassung der vertikalen Position des Schwimmerkörpers (8, 51) im Behälter (3, 46) vorhanden ist.

4. Vorrichtung nach einem der vorhergehenden Ansprüche, **dadurch gekennzeichnet, dass** das Steuerelement (10) und der Schwimmerkörper (8) so abgestimmt sind, dass die zeitweise Kopplung von Steuerelement (10) und Schwimmerkörper (8) berührungslos erfolgt.

5. Vorrichtung nach einem der vorhergehenden Ansprüche, **dadurch gekennzeichnet, dass** eine Führungsanordnung (9) vorgesehen ist, mit welcher das Steuerelement (10) entlang einer Längsachse der Führungsanordnung (9) geführt hin- und herbewegbar ist.

6. Vorrichtung nach einem der vorhergehenden Ansprüche, **dadurch gekennzeichnet, dass** die Führungsanordnung (9) ein Hohlgefäß (13) mit einem Hohlvolumen umfasst.

7. Vorrichtung nach einem der vorhergehenden Ansprüche, **dadurch gekennzeichnet, dass** das Steuerelement (10) im Hohlvolumen des Hohlgefäßes (13) hin- und herbewegbar ist.

8. Vorrichtung nach einem der vorhergehenden Ansprüche, **dadurch gekennzeichnet, dass** die Führungsanordnung (13) ein Hohlgefäß umfasst, in dem eine Flüssigkeit (15) eingeschlossen ist, wobei das Steuerelement (10) in der Flüssigkeit (15) eingetaucht ist.

9. Vorrichtung nach einem der vorhergehenden Ansprüche, **dadurch gekennzeichnet, dass** Antriebsmittel zur angetriebenen Bewegung des Steuerelements (10) vorhanden sind.

10. Vorrichtung nach einem der vorhergehenden Ansprüche, **dadurch gekennzeichnet, dass** die Antriebsmittel eine Zuführleitung (25) und/oder eine Abführleitung (26) für ein Steuerfluid (22) umfassen, wobei die Zuführleitung (25) und/oder die Abführleitung (26) an die Führungsanordnung (9) anschließt.

11. Vorrichtung nach einem der vorhergehenden Ansprüche, **dadurch gekennzeichnet, dass** eine Kontrolleinheit (62) vorhanden ist, welche Messsignale von der Erfassungseinrichtung (2) erhält und verarbeitet und einer übergeordneten Einheit (20, 59, 64, 65) bereitstellt.

12. Vorrichtung nach einem der vorhergehenden Ansprüche, **dadurch gekennzeichnet, dass** die Kontrolleinheit (62) mit einer Auswerteeinheit (64) kommuniziert, welche Daten an einen Internet-Server (65) übermittelt, über welchen eine Alarmierung als E-Mail-Meldung (66) und/oder Push-Meldung (68) an eine beliebige Teilnehmerzahl übertragbar ist.

13. Abscheideanlage (1, 45, 61) mit einem Abscheidebehälter (3, 46) zur Aufnahme eines Mehrkomponenten-Gemisches mit einer Vorrichtung (2) nach einem der vorhergehenden Ansprüche.

14. Abscheideanlage nach Anspruch 13 **dadurch gekennzeichnet, dass** die Kontrolleinheit (62) ausgebildet ist, mit einer übergeordneten Einheit (20, 59, 64, 65) zusammenzuarbeiten, welche zur Erzeugung einer Warnmeldung ausgelegt ist.

15. Abscheideanlage nach Anspruch 13 oder Anspruch 14 **dadurch gekennzeichnet, dass** die übergeordneten Einheit (20, 59, 64, 65) als Fernüberwachungsanlage ausgebildet ist, welche auf einen Internet-Server (65) zurückgreift, der eine Warnmeldung als E-Mail-Meldung (66) und/oder Push-Meldung (68) generiert.
